(19) Europäisches Patentamt
European Patent Office
Office européen des brevets

(11) EP 2 341 101 B1

# (12) EUROPEAN PATENT SPECIFICATION

(45) Date of publication and mention of the grant of the patent:
**07.11.2018 Bulletin 2018/45**

(21) Application number: **09817822.1**

(22) Date of filing: **30.09.2009**

(51) Int Cl.:
***C08L 15/00*** *(2006.01)* ***B60C 1/00*** *(2006.01)*
***C08C 19/00*** *(2006.01)* ***C08F 36/08*** *(2006.01)*
***C08K 3/36*** *(2006.01)* ***C08C 19/06*** *(2006.01)*

(86) International application number:
**PCT/JP2009/067055**

(87) International publication number:
**WO 2010/038790 (08.04.2010 Gazette 2010/14)**

## (54) RUBBER COMPOSITION FOR TIRE AND TIRE

KAUTSCHUKZUSAMMENSETZUNG FÜR REIFEN UND REIFEN

COMPOSITION DE CAOUTCHOUC POUR PNEU ET PNEU

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.10.2008 JP 2008256753**
**16.09.2009 JP 2009214550**

(43) Date of publication of application:
**06.07.2011 Bulletin 2011/27**

(73) Proprietor: **Sumitomo Rubber Industries, Ltd.**
**Kobe-shi, Hyogo 651-0072 (JP)**

(72) Inventors:
- **INOUE Satoru**
  **Kobe-shi**
  **Hyogo 651-0072 (JP)**
- **TERAKAWA Katsumi**
  **Kobe-shi**
  **Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A2- 0 588 287** **JP-A- 3 239 739**
**JP-A- 53 001 290** **JP-A- 2004 182 905**
**JP-A- 2004 196 937** **JP-A- 2005 041 960**
**JP-A- 2005 263 851** **JP-A- 2005 281 621**
**JP-A- 2006 188 621** **JP-A- 2007 039 585**

- **M.R. Fatimah Rubaizah, M.Y. Yusniwati, M.S. Fauzi: "Evaluation of epoxidised natural rubber from latex concentrate", CAS 2006, 31 December 2006 (2006-12-31), pages 29-35, 2006 Retrieved from the Internet: URL:http://vitaldoc.lgm.gov.my:8060/vital/access/services/Download/vital1:79639/ATTACHMENT01 [retrieved on 2013-06-03]**
- **GELLING I R: "Expoidised Natural Rubber", JOURNAL OF RUBBER RESEARCH, LEMBAGA GETAH MALAYSIA, KUALA LUMPUR, MY, vol. 6, no. 3, 1 January 1991 (1991-01-01) , pages 184-205, XP008162723, ISSN: 1511-1768**
- **GELLING I R: "Modification of Natural Rubber Latex with Peracetic Acid", RUBBER CHEMISTRY AND TECHNOLOGY, AMERICAN CHEMICAL SOCIETY, RUBBER DIVISION, US, vol. 58, 1 January 1985 (1985-01-01), pages 86-96, XP008162724, ISSN: 0035-9475**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 341 101 B1

## Description

### TECHNICAL FIELD

The present invention relates to a tire produced using a rubber composition for a tire.

### BACKGROUND ART

Up until now, raw materials derived from petroleum resources such as synthetic rubbers, including butadiene rubber (BR), or carbon black have been used to produce tire rubbers in a highly dependent manner. In recent years, environmental issues are concerned and thus the regulations on the carbon dioxide emissions are tightened. Also, the petroleum resources are finite, which puts a limit on the use of the raw materials derived from petroleum resources. Accordingly, it is desirable to develop a rubber composition for a tire, which contains raw materials derived from non-petroleum resources as an alternative to a part or the whole of the above raw materials derived from petroleum resources, has various excellent properties, and is applicable to components such as a tread.

For example, Patent Document 1 discloses a rubber composition for a tread, which contains epoxidized natural rubber and silica for improving grip performance, fuel economy, and abrasion resistance in a balanced manner. Further, a rubber composition for a tire tread is disclosed which contains epoxidized natural rubber, carbon black, and optionally silica and the like, which lead to improvement of properties such as abrasion resistance and grip performance (see Patent Documents 2 and 3).

Now, demands for improving fuel saving performance and abrasion resistance are getting increased, and it is desirable to improve both of these properties in a balanced manner. Further, it is desirable to improve grip performance as well as fuel saving performance and abrasion resistance in a balanced manner. In consideration of such desires, there is still room to improve these properties of the above rubber compositions.

EP 0 588 287 A2 discloses a rubber composition comprising a functional group-containing polymer having a molecular weight of 1000 to 100, 000, wherein the polymer comprises 0 to 60% by mole of a structural unit, such as styrene, 40 to 100% by mole of a structural unit, such as isoprene or butadiene, plus a structural unit, such as isoprene or butadiene, and on one end of the molecule in an average of at least 0.6 groups per molecule of a functional group, such a hydroxyl group.

JP 2005-041,960 A relates to a rubber composition for a tire tread comprising 100 parts by weight of a rubber component containing 5 to 100% by weight of modified epoxidized natural rubber, which is obtained by reacting epoxidized natural rubber with a Lewis acid, such as phenol or acidic anhydride, in order to carry out a ring-opening of the epoxy group.

Patent Document 1: JP 2007-246712 A
Patent Document 2: JP 2004-182905 A
Patent Document 3: JP 2006-199858 A

### SUMMARY OF THE INVENTION

An object of the present invention is to provide a rubber composition for a tire and a tire using the same which solve the above problems and improve fuel economy (rolling resistance) and abrasion resistance in a balanced manner. Another object of the present invention is to provide a rubber composition for a tire and a tire using the same which improve fuel economy, abrasion resistance, and grip performance in a balanced manner.

The present invention relates to a tire produced using a rubber composition for a tire, which includes a vulcanizing agent and a rubber component containing modified natural rubber that has a hydroxyl group directly bonded to a main chain of natural rubber, wherein the modified natural rubber has at least one of constitutional units represented by the following formulae (1), (2), (3), and (4) :

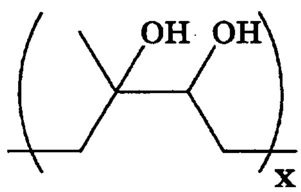

(1)

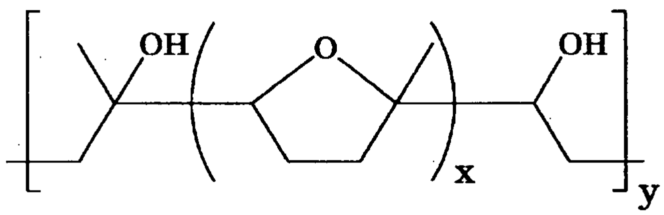

(2)

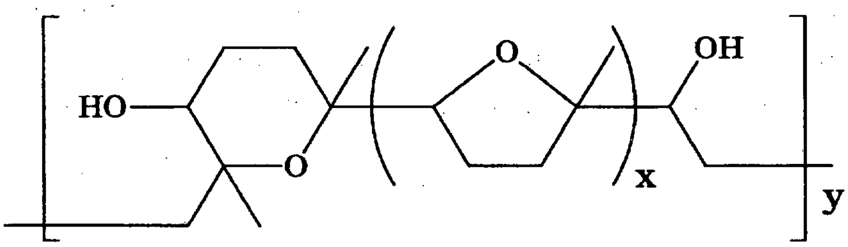

(3)

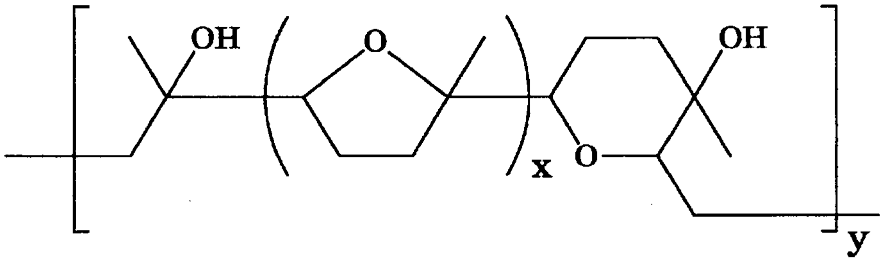

(4)

wherein each of x and y is an integer of 1 or greater and wherein the content of hydroxyl groups in the modified natural rubber is 1% to 20% by mole based on isoprene units.

The modified natural rubber preferably has an epoxy group.

The modified natural rubber preferably has a constitutional unit represented by the following formula (5) :

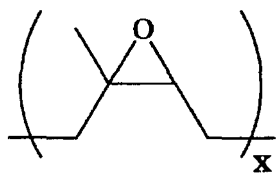

(5)

wherein x is an integer of 1 or greater.

The content of hydroxyl groups in the modified natural rubber is 1% to 20% by mole based on isoprene units.

The rubber composition preferably contains 20% by mass or more of the modified natural rubber per 100% by mass of the rubber component.

The rubber composition preferably further includes 10 to 100 parts by mass of silica per 100 parts by mass of the rubber component.

The present invention also relates to a tire produced using the above rubber composition.

The present invention can provide a rubber composition and a tire which can improve fuel economy (rolling resistance) and abrasion resistance in a balanced manner because they are produced using a vulcanizing agent and modified natural rubber with a hydroxyl group directly bonded to the main chain of natural rubber. Further, the rubber composition and tire of the present invention can improve grip performance as well as fuel economy and abrasion resistance in a balanced manner.

BEST MODE FOR CARRYING OUT THE INVENTION

The rubber composition for a tire in the present invention contains a vulcanizing agent, and modified natural

rubber with a hydroxyl group directly bonded to the main chain of natural rubber (hydroxylated natural rubber). The rubber composition contains natural rubber the main chain of which is directly bonded with a hydroxyl group, as a rubber component. This leads to balanced improvement of the fuel economy (rolling resistance) and abrasion resistance of a vulcanized rubber composition, and to sufficient achievement of the both properties. Particularly when containing epoxidized natural rubber the main chain of which is directly bonded with a hydroxyl group (hydroxylated, epoxidized natural rubber) as the modified natural rubber, the rubber composition can improve fuel economy, abrasion resistance, and grip performance in a balanced manner, and achieve all these properties sufficiently.

The present invention exerts an effect of increasing the interaction between natural rubber and a filler such as silica (increasing the affinity between natural rubber and a filler) by directly bonding a hydroxyl group to the main chain of the natural rubber. This promotes homogeneous dispersion of the filler and improves fuel economy and abrasion resistance in a balanced manner. Also, epoxidation of a natural rubber which contains a hydroxyl group directly bonded to the main chain of natural rubber leads to a further increase in the effects of the above interaction and homogeneous dispersion. This makes it possible for the rubber composition to achieve grip performance as well as fuel economy and abrasion resistance at even higher levels in a balanced manner.

The content of hydroxyl groups in the modified natural rubber (hydroxylation rate: the rate of hydroxyl groups bonded to the isoprene units of natural rubber) is 1% by mole or more, more preferably 2% by mole or more, and still more preferably 3% by mole or more. Also, the hydroxylation rate is 20% by mole or less, more preferably 15% by mole or less, and still more preferably 8% by mole or less. A rate of less than 1% by mole tends not to increase the interaction sufficiently. On the other hand, a rate of more than 20% by mole tends to make a vulcanized rubber too hard and decrease abrasion resistance.

The epoxidation rate of the modified natural rubber (the rate of epoxy groups to the isoprene units of natural rubber) is preferably 5% by mole or more, more preferably 10% by mole or more, and still more preferably 15% by mole or more. Also, the above epoxidation rate is preferably 40% by mole or less, more preferably 35% by mole or less, and still more preferably 30% by mole or less. A rate of less than 5% by mole tends not to improve grip performance sufficiently. On the other hand, a rate of more than 40% by mole tends to make a vulcanized rubber too hard and decrease fuel economy.

Here, the hydroxylation rate and epoxidation rate can be determined by methods described in Examples below.

The modified natural rubber has at least one constitutional unit selected from the group consisting of the above formulae (1), (2), (3), and (4). This makes it possible to increase the interaction between a filler and natural rubber, promote homogeneous dispersion of the filler, and improve fuel economy and abrasion resistance in a balanced manner. Further, the modified natural rubber preferably has a constitutional unit represented by the above formula (5). This makes it possible to further improve the effects of the above interaction and homogeneous dispersion, and improve fuel economy, abrasion resistance, and grip performance in a balanced manner.

The modified natural rubber according to the present invention may not be modified with amines (for example, the rubber may not contain amines bonded to the main chain thereof) .

Here, the rubber composition may contain one kind of modified natural rubber, or contain two or more kinds of modified natural rubber.

The method of producing modified natural rubber (hydroxylated natural rubber, or hydroxylated epoxidized natural rubber) is not particularly limited, and modified natural rubber can be produced for example by introducing a hydroxyl group into the main chain of natural rubber or of epoxidized natural rubber in accordance with a known method. For example, modified natural rubber can be produced by dissolving natural rubber or epoxidized natural rubber in an organic solvent, adding predetermined amounts of an acid catalyst and water to the solution, and causing a reaction while keeping the reaction solution between a room temperature and a reflux temperature of the reaction solution. The reaction time is mainly affected by the addition amounts of the acid catalyst and water, and the reaction temperature. Thus, controlling the addition amounts and the reaction temperature makes it possible to control the hydroxyl-group modification rate of the unsaturated bonds of natural rubber or of epoxidized natural rubber.

Examples of the natural rubber include rubbers generally used in rubber industries, such as RSS#3 and TSR20.

The epoxidized natural rubber (ENR) may be commercially available ENR or may be a rubber produced by epoxidizing natural rubber (NR). The method of epoxidizing NR is not particularly limited, and a method such as a chlorohydrin method, a direct oxidation method, a hydrogen peroxide method, an alkylhydroperoxide method, or a peroxide method may be employed (see JP H04-26617 B, JP H02-110182 A, UK Patent GB 2113692, etc.). Examples of the peroxide method include a method of causing a reaction between NR and an organic peroxide such as a peracetic acid or a performic acid.

The rubber component includes not only modified natural rubber but also rubber such as natural rubber (NR), epoxidized natural rubber (ENR), styrene butadiene rubber (SBR), butadiene rubber (BR), butyl rubber (IIR), halogenated butyl rubber (X-IIR), or a halogenated product of a copolymer of an isomonoolefin and a p-alkylstyrene. Among these, BR and SBR are preferable which can improve fuel economy, abrasion resistance, and grip performance in a balanced manner. Also, the rubber component preferably includes rubber derived from natural rubber, that is, non-petroleum-derived rubber such as NR or ENR. This is because the rubber can improve the above properties, leads to an increase in the non-petroleum resource content to make the rubber composition environmentally friendly, and thus can help preparations for a future decrease in the amount of oil supply.

The rubber composition preferably contains 20% by mass or more, more preferably 30% by mass or more of the modified natural rubber per 100% by mass of the rubber component. An amount of the modified natural rubber of less than 20% by mass tends not to sufficiently improve fuel economy and abrasion resistance in a balanced manner. Also, the rubber composition may contain 100% by mass of the modified natural rubber.

If the rubber composition is to contain BR, the BR content is preferably 10% by mass or more, and more preferably 15% by mass or more in 100% by mass of the rubber component. Also, the BR content is preferably 70% by mass or less, and more preferably 60% by mass or less.

If the rubber composition is to contain SBR, the SBR content is preferably 80% by mass or less, and more preferably 70% by mass or less in 100% by mass of the rubber component. An SBR content of more than 80% by mass tends not to sufficiently improve fuel economy and abrasion resistance in a balanced manner.

If the rubber composition is to contain NR, the NR content is preferably 10% by mass or more, and more preferably 15% by mass or more in 100% by mass of the rubber component. Also, the NR content is preferably 80% by mass or less, and more preferably 70% by mass or less.

If the rubber composition is to contain ENR, the ENR content is preferably 10% by mass or more, and more preferably 15% by mass or more in 100% by mass of the rubber component. Also, the ENR content is preferably 80% by mass or less, and more preferably 70% by mass or less.

The rubber composition of the present invention contains a vulcanizing agent. The covalent crosslinking caused by the vulcanizing agent accounts for a large proportion of the crosslinking of the rubber composition.

Examples of the vulcanizing agent include organic peroxides and sulfur vulcanizing agents. Examples of the organic peroxides include benzoyl peroxides, dicumyl peroxides, di-t-butyl peroxides, t-butyl cumyl peroxides, methyl ethyl ketone peroxides, cumene hydroperoxides, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3, and 1,3-bis(t-butylperoxypropyl)benzene. Also, examples of the sulfur vulcanizing agents include sulfur and morpholine disulfide. Among these, sulfur vulcanizing agents such as sulfur are preferable in terms of the blending effects and strength properties.

The rubber composition preferably contains 1 part by mass or more, more preferably 1.5 parts by mass or more, and still more preferably 2 parts by mass or more of the vulcanizing agent per 100 parts by mass of the rubber component. Also, the rubber composition preferably contains 10 parts by mass or less, more preferably 8 parts by mass or less, and still more preferably 5 parts by mass or less of the vulcanizing agent. A vulcanizing agent content of less than 1 part by mass tends not to sufficiently vulcanize the rubber composition. On the other hand, a vulcanizing agent content of more than 10 parts by mass tends to excessively vulcanize the rubber composition.

The rubber composition may contain a vulcanization accelerator as well as the vulcanizing agent.

Examples of the vulcanization accelerator include sulfenamide vulcanization accelerators, thiazol vulcanization accelerators, thiuram vulcanization accelerators, thiourea vulcanization accelerators, guanidine vulcanization accelerators, dithiocarbamic acid vulcanization accelerators, aldehyde-amine vulcanization accelerators, aldehyde-ammonia vulcanization accelerators, imidazoline vulcanization accelerators, and xanthate vulcanization accelerators. Among these, sulfenamide vulcanization accelerators are preferable which have excellent crosslinking reactivity.

Examples of the sulfenamide vulcanization accelerators include sulfenamide compounds such as CBS (N-cyclohexyl-2-benzothiazyl sulfenamide), TBBS (N-t-butyl-2-benzothiazyl sulfenamide), N,N-dicyclohexyl-2-benzothiazyl sulfenamide, N-oxydiethylene-2-benzothiazyl sulfenamide, and N,N-diisopropyl-2-benzothiazole sulfenamide.

The rubber composition preferably contains 0.5 parts by mass or more, more preferably 1 part by mass or more, and still more preferably 1.5 parts by mass or more of the vulcanization accelerator per 100 parts by mass of the rubber component. Also, the rubber composition preferably contains 6 parts by mass or less, more preferably 4 parts by mass or less, and still more preferably 2 parts by mass or less of the vulcanization accelerator. A vulcanization accelerator content of less than 0.5 parts by mass tends not to sufficiently vulcanize the rubber composition, leading to failure to provide required rubber properties. On the other hand, a vulcanization accelerator content of more than 6 parts by mass tends to excessively vulcanize the rubber composition.

The rubber composition of the present invention may contain a filler. For example, the rubber composition can suitably contain silica, which is a non-petroleum-derived filler. Examples of the silica include, but are not limited to, silica produced by a wet process and silica produced by a dry process.

A BET specific surface area (BET) of the silica is preferably 30 $m^2/g$ or larger, and more preferably 50 $m^2/g$ or larger. A BET specific surface area of smaller than 30 $m^2/g$ tends to decrease abrasion resistance and grip performance. Also, the BET of the silica is preferably 250 $m^2/g$ or smaller, and more preferably 200 $m^2/g$ or smaller. A BET specific surface area of larger than 250 $m^2/g$ may decrease processability and decrease dispersibility of silica, thereby tending not to improve the above properties in a balanced manner. Here, the BET specific surface area is a value determined by the BET method in accordance with ASTM D3037-81.

The rubber composition preferably contains 10 parts by mass or more, more preferably 20 parts by mass or more of the silica per 100 parts by mass of the rubber component. A silica content of less than 10 parts by mass may excessively decrease strength and rigidity, and thus require the rubber composition to contain a large amount of a petroleum-derived reinforcing agent such as carbon black; this tends to increase the content of petroleum-derived ingredients. Also, the rubber composition preferably contains 100 parts by mass or less, and more preferably 80 parts by mass or less of the silica. A silica content of more than 100 parts by mass tends to decrease processability.

The rubber composition preferably contains a silane coupling agent as well as silica.

The silane coupling agent is not particularly limited, and any silane coupling agents conventionally used with silica in the tire industries can be used as the silane coupling agent. Examples thereof include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropylmethacrylate monosulfide, and 3-trimethoxysilylpropylmethacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane, and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane, and 3-nitropropyltriethoxysilane; and chloro silane coupling agents such as 3-chloropropyltrimethoxysilane, 3-chloropropyltriethoxysilane, 2-chloroethyltrimethoxysilane, and 2-chloroethyltriethoxysilane. Each of these silane coupling agents may be used alone, or two or more of these may be used in combination.

If the rubber composition is to contain a silane coupling agent, the silane coupling agent content is preferably 0.5 parts by mass or more, and more preferably 1 part by mass or more per 100 parts by mass of the silica. A silane coupling agent content of less than 0.5 parts by mass may result in insufficient reaction with the silica, which tends not to enhance reinforcement. Also, the silane coupling agent content is preferably 15 parts by mass or less, and more preferably 13 parts by mass or less. If the silane coupling agent content is more than 15 parts by mass, further addition of a silane coupling agent may not result in further improvement of rubber strength and abrasion resistance, and this tends to increase cost.

The rubber composition may contain carbon black. A rubber composition containing carbon black can increase rubber strength. Examples of the carbon black to be used include HAF, ISAF, SAF, GPF, and FEF.

If the rubber composition is to contain carbon black, the nitrogen adsorption specific surface area ($N_2SA$) of the carbon black is preferably 25 $m^2/g$ or larger, and more preferably 30 $m^2/g$ or larger. An $N_2SA$ of the carbon black of smaller than 25 $m^2/g$ tends to decrease rubber reinforcement. Also, the $N_2SA$ of the carbon black is preferably 280 $m^2/g$ or smaller, and more preferably 250 $m^2/g$ or smaller. An $N_2SA$ of the carbon black of larger than 280 $m^2/g$ may lead to a very high viscosity of the unvulcanized rubber, which tends to decrease processability or decrease fuel economy. The $N_2SA$ of the carbon black can be determined in accordance with the method A of JIS K6217-7.

The rubber composition preferably contains 3 parts by mass or more, more preferably 4 parts by mass or more, and still more preferably 5 parts by mass or more of the carbon black per 100 parts by mass of the rubber component. A carbon black content of less than 3 parts by mass tends to decrease weather resistance and ozone resistance. Also, the rubber composition preferably contains 20 parts by mass or less, more preferably 15 parts by mass or less, and still more preferably 10 parts by mass or less of the carbon black. A carbon black content of more than 20 parts by mass may increase the amount of petroleum-derived raw materials, thereby tending to be unfriendly to the environment.

The rubber composition in the present invention can optionally contain additives generally used in the rubber industries, in addition to the above modified natural rubber, other rubbers in the rubber component, vulcanizing agents, vulcanization accelerators, silica, silane coupling agents, and carbon black. Examples of the additives include zinc oxide, stearic acid, various age resistors, and waxes.

The rubber composition in the present invention can be produced by a known method. That is, for example, the respective ingredients described above are mixed by a rubber kneader such as an open roll mill, a Banbury mixer, or an internal mixer, and are then vulcanized so that a rubber composition can be produced.

The rubber composition in the present invention is applicable to a vehicle tire, and can improve fuel economy (rolling resistance), abrasion resistance, and also grip performance in a balanced manner.

The above rubber composition is applicable to each of components of a tire. It is particularly suitable to use the rubber composition for a tread, a base tread, a sidewall, a clinch, a chafer, a ply, a band, and a breaker.

The tire of the present invention can be produced using the above rubber composition by a common method. That is, an unvulcanized rubber composition with the respective additives optionally blended therein is extruded into the shape of each component of a tire. Next, the extruded rubber composition is built up in a usual manner on a tire building machine, so that an unvulcanized tire is formed. The unvulcanized tire is then heated and pressurized in a vulcanizer, and thereby a tire can be produced.

Although applicable to any type of vehicle, the tire of the present invention is suitably applicable to particularly passenger vehicles, trucks, buses, and low emission vehicles (eco-friendly cars) coping to global environmental protection.

EXAMPLES

Now, the present invention will be more specifically described based on Examples. However, the present invention is not limited thereto.

(Ingredients)

Hydroxylated natural rubber "a": Produced in the following Preparation 1
Hydroxylated natural rubber "b": Produced in the following Preparation 2
Hydroxylated natural rubber "c": Produced in the following Preparation 3
Hydroxylated epoxidized natural rubber A: Produced in the following Preparation 4
Hydroxylated epoxidized natural rubber B: Produced in the following Preparation 5
Hydroxylated epoxidized natural rubber C: Produced in the following Preparation 6
Natural rubber: SMR-CV60 (Malaysian solid natural rubber, Mw: 1,300,000)
Epoxidized natural rubber: Epoxidized natural rubber with epoxidation rate of 28% by mole
SBR: SBR1500 (produced by JSR Corporation)
BR: BR150 (produced by Ube Industries, Ltd.)
Silica: Ultrasil VN3 ($N_2SA$: 210 $m^2/g$) produced by Degussa AG
Carbon black (HAF) : DIABLACK H ($N_2SA$: 79 $m^2/g$) produced by Mitsubishi Chemical Corporation
Silane coupling agent: Si266 (bis(3-triethoxysilylpropyl)disulfide) produced by Degussa AG
Stearic acid: Stearic acid produced by NOF Corporation
Zinc oxide: Zinc oxide #2 produced by Mitsui Mining & Smelting Co., Ltd.
Sulfur: Sulfur powder produced by Tsurumi Chemical Co., Ltd. Vulcanization accelerator: NOCCELER NS (N-tert-butyl-2-benzothiazolyl sulfenamide) produced by Ouchi Shinko Chemical Industrial Co., Ltd.

Preparation 1: Hydroxylated natural rubber "a"

A 5000-ml glass reaction vessel provided with a thermometer and a mechanical stirrer with a fluorocarbon resin blade was placed in a temperature controllable bath to provide a reactor. In the vessel, 100 parts by mass of natural rubber was dissolved in toluene, and this solution was then added with 2 parts by mass of an acid catalyst (p-toluenesulfonic acid) and 20 parts by mass of water. The solution was stirred vigorously for five hours at a reflux temperature thereof. The reaction solution was coagulated with methanol, and the coagulated rubber was washed in water and then vacuum-dried for six hours at 50°C to 60°C. Thereby, hydroxylated natural rubber "a" having a hydroxylation rate of 1% by mole was produced.

Preparation 2: Hydroxylated natural rubber "b"

Hydroxylated natural rubber "b" was produced by the same procedure as that for preparation of the hydroxylated natural rubber "a" in Preparation 1 except that the addition amounts of the acid catalyst and water were respectively changed to 10 parts by mass and 80 parts by mass.

Preparation 3: Hydroxylated natural rubber "c"

Hydroxylated natural rubber "c" was produced by the same procedure as that for preparation of the hydroxylated natural rubber "a" in Preparation 1 except that the addition amounts of the acid catalyst and water were respectively changed to 19 parts by mass and 100 parts by mass.

Preparation 4: Hydroxylated epoxidized natural rubber A

Hydroxylated epoxidized natural rubber A was produced by the same procedure as that for preparation of the hydroxylated natural rubber "a" in Preparation 1 except that epoxidized natural rubber was used in place of the natural rubber.

Preparation 5: Hydroxylated epoxidized natural rubber B

Hydroxylated epoxidized natural rubber B was produced by the same procedure as that for preparation of the hydroxylated epoxidized natural rubber A in Preparation 4 except that the addition amounts of the acid catalyst and water were respectively changed to 5 parts by mass and 80 parts by mass.

Preparation 6: Hydroxylated epoxidized natural rubber C

Hydroxylated epoxidized natural rubber C was produced by the same procedure as that for preparation of the hydroxylated epoxidized natural rubber A in Preparation 4 except that the addition amounts of the acid catalyst and water were respectively changed to 10 parts by mass and 100 parts by mass.

(Method of determining Epoxidation Rate and Hydroxylation Rate)

Each of the produced dry rubbers was dissolved in deuterated chloroform, and integrated values (h (ppm)) of the peak area of carbon-carbon double bond and of the peak area of aliphatic moiety were determined through nuclear magnetic resonance (NMR) spectrometric analysis. Next, the determined values were used in the following calculation formula to calculate the epoxidation rate. Then, the hydroxylation rate was calculated from a change rate in NMR spectrometric analysis and a change rate of absorption peaks of hydroxyl group (3400$cm^{-1}$) determined through attenuated total reflectance Fourier transform infrared spectroscopy (ATR-FTIR).

$$(\text{Epoxidation rate E\%}) = 3 \times h(2.69) / (3 \times h(2.69) + 3 \times h(5.14) + h(0.87)) \times 100$$

Tables 1 and 2 respectively show the hydroxylation rate of the prepared hydroxylated natural rubbers "a" to "c", and the hydroxylation rate and epoxidation rate of the hydroxylated epoxidized natural rubbers A to C.

As a result of the above analyses, the hydroxylated natural rubbers "a" to "c" were observed to have the constitutional units represented by the above formulas (1) and (2). Also, the hydroxylated epoxidized natural rubbers A to C were observed to have the constitutional units represented by the above formulas (1), (2), and (5).

[Table 1]

| Hydroxylated natural rubber | | | |
|---|---|---|---|
| | a | b | c |
| Hydroxylation rate (% by mole) | 1 | 8 | 20 |

[Table 2]

| Hydroxylated epoxidized natural rubber | | | |
|---|---|---|---|
| | A | B | C |
| Hydroxylation rate (% by mole) | 1 | 8 | 20 |
| Epoxidation rate (% by mole) | 28 | 20 | 9 |

Examples 1 to 8 and Comparative Examples 1 to 4

<Preparation of Evaluation Samples>

According to each formulation shown in Tables 3 to 6, chemical agents other than the sulfur and the vulcanization accelerator were kneaded with a 250-cc LABO PLASTOMILL produced by Toyo Seiki Seisaku-sho, Ltd. Thereafter, the sulfur and the vulcanization accelerator were added to the mixture, and they were mixed with an open roll mill. A resulting unvulcanized rubber composition was then press-vulcanized for 20 minutes at 160°C. Thereby, each evaluation sample was produced.

The following Evaluations 1 to 4 were performed with the produced evaluation samples. Tables 3 to 6 show respective test results.

<Evaluation 1 (Examples 1 to 3 and Comparative Example 1)>

(Rolling Resistance Index)

The loss tangent (tan δ) of each evaluation sample was determined with a viscoelasticity spectrometer produced by Iwamoto Seisakusho Co., Ltd. under the following conditions: a temperature of 70°C; an initial strain of 10%; a dynamic strain of 2%; and a frequency of 10 Hz. The determined loss tangent was used in the following calculation formula to calculate the rolling resistance index. The resultant index is relative to the rolling resistance index of Comparative Example 1 (= 100) . The larger the rolling resistance index, the more the rolling resistance is reduced, which is preferable.

(Rolling resistance index) = ((Tan δ of Comparative Example 1) / (Tan δ of each sample)) × 100

(Abrasion Test Index)

The volume loss of each evaluation sample was determined with a Lambourn abrasion tester (produced by Iwamoto Seisakusho Co., Ltd.) under the conditions of a slip ratio of 20% and a test period of 5 minutes. The determined volume loss of each sample was used in the following calculation formula to calculate the abrasion test index. The resultant index is relative to the abrasion test index of Comparative Example 1 (= 100). The larger the abrasion test index, the better the abrasion resistance.

(Abrasion test index) = ((Volume loss of Comparative Example 1) / (Volume loss of each sample)) × 100

<Evaluation 2 (Example 4 and Comparative Example 2)>

(Rolling Resistance Index)

The rolling resistance index was determined in the same manner as in Evaluation 1 except that the resultant index is relative to the rolling resistance index of Comparative Example 2 (= 100).

(Abrasion Test Index)

The abrasion test index was determined in the same manner as in Evaluation 1 except that the resultant index is relative to the abrasion test index of Comparative Example 2 (= 100).

<Evaluation 3 (Example 5 and Comparative Example 3)>

(Rolling Resistance Index)

The rolling resistance index was determined in the same manner as in Evaluation 1 except that the resultant index is relative to the rolling resistance index of Comparative Example 3 (= 100).

(Abrasion Test Index)

The abrasion test index was determined in the same manner as in Evaluation 1 except that the resultant index is relative to the abrasion test index of Comparative Example 3 (= 100).

<Evaluation 4 (Examples 6 to 8 and Comparative Example 4)>

(Rolling Resistance Index)

The rolling resistance index was determined in the same manner as in Evaluation 1 except that the resultant index is relative to the rolling resistance index of Comparative Example 4 (= 100).

(Abrasion Test Index)

The abrasion test index was determined in the same manner as in Evaluation 1 except that the resultant index is relative to the abrasion test index of Comparative Example 4 (= 100).

(Grip Index)

The loss tangent (tan $\delta$) of each evaluation sample was determined with a viscoelasticity spectrometer produced by Iwamoto Seisakusho Co., Ltd. under the following conditions: a temperature of 0°C; an initial strain of 10%; a dynamic strain of 0.5%; and a frequency of 10 Hz. The determined loss tangent was used in the following calculation formula to calculate the grip index. The resultant index is relative to the grip index of Comparative Example 4 (= 100). The larger the grip index, the better the grip performance.

$$(\text{Grip index}) = ((\text{Tan } \delta \text{ of each sample}) / (\text{Tan } \delta \text{ of Comparative Example 4})) \times 100$$

[Table 3]

| | Comparative Example 1 | Example 1 | Example 2 | Example 3 |
|---|---|---|---|---|
| Hydroxylated natural rubber a | | 100 | | |
| Hydroxylated natural rubber b | | | 20 | |
| Hydroxylated natural rubber c | | | | 20 |
| Natural rubber | 100 | | 80 | 80 |

(continued)

| | Comparative Example 1 | Example 1 | Example 2 | Example 3 |
|---|---|---|---|---|
| SBR | | | | |
| BR | | | | |
| Silica | 40 | 40 | 40 | 40 |
| Carbon black | 10 | 10 | 10 | 10 |
| Silane coupling agent | 3.2 | 3.2 | 3.2 | 3.2 |
| Stearic acid | 2 | 2 | 2 | 2 |
| Zinc oxide | 3 | 3 | 3 | 3 |
| Sulfur | 2 | 2 | 2 | 2 |
| Vulcanization accelerator | 1.5 | 1.5 | 1.5 | 1.5 |
| Rolling resistance index | 100 | 105 | 107 | 105 |
| Abrasion test index | 100 | 103 | 106 | 103 |

[Table 4]

| | Comparative Example 2 | Example 4 |
|---|---|---|
| Hydroxylated natural rubber a | | |
| Hydroxylated natural rubber b | | 30 |
| Hydroxylated natural rubber c | | |
| Natural rubber | 30 | |
| SBR | 70 | 70 |
| BR | | |
| Silica | 50 | 50 |
| Carbon black | 5 | 5 |
| Silane coupling agent | 4 | 4 |
| Stearic acid | 2 | 2 |
| Zinc oxide | 3 | 3 |
| Sulfur | 2 | 2 |
| Vulcanization accelerator | 1.5 | 1.5 |
| Rolling resistance index | 100 | 110 |
| Abrasion test index | 100 | 105 |

[Table 5]

| | Comparative Example 3 | Example 5 |
|---|---|---|
| Hydroxylated natural rubber a | | |
| Hydroxylated natural rubber b | | 40 |
| Hydroxylated natural rubber c | | |
| Natural rubber | 40 | |
| SBR | | |

(continued)

| | Comparative Example 3 | Example 5 |
|---|---|---|
| BR | 60 | 60 |
| Silica | 20 | 20 |
| Carbon black | 30 | 30 |
| Silane coupling agent | 1.6 | 1.6 |
| Stearic acid | 2 | 2 |
| Zinc oxide | 3 | 3 |
| Sulfur | 2 | 2 |
| Vulcanization accelerator | 1.5 | 1.5 |
| Rolling resistance index | 100 | 109 |
| Abrasion test index | 100 | 106 |

[Table 6]

| | Comparative Example 4 | Example 6 | Example 7 | Example 8 |
|---|---|---|---|---|
| Hydroxylated epoxidized natural rubber A | | 100 | | |
| Hydroxylated epoxidized natural rubber B | | | 20 | |
| Hydroxylated epoxidized natural rubber C | | | | 20 |
| Epoxidized natural rubber | 100 | | 80 | 80 |
| Silica | 40 | 40 | 40 | 40 |
| Carbon black | 10 | 10 | 10 | 10 |
| Silane coupling agent | 3.2 | 3.2 | 3.2 | 3.2 |
| Stearic acid | 2 | 2 | 2 | 2 |
| Zinc oxide | 3 | 3 | 3 | 3 |
| Sulfur | 2 | 2 | 2 | 2 |
| Vulcanization accelerator | 1.5 | 1.5 | 1.5 | 1.5 |
| Rolling resistance index | 100 | 107 | 107 | 103 |
| Abrasion test index | 100 | 107 | 108 | 103 |
| Grip index | 100 | 102 | 103 | 104 |

Table 3 shows that use of hydroxylated natural rubber in place of natural rubber led to balanced improvement of the fuel economy (rolling resistance index) and abrasion resistance. Further, Tables 4 and 5 show that, even when the rubber composition contained a mix of natural rubber and one of SBR and BR, use of hydroxylated natural rubber in place of the natural rubber also led to balanced improvement of the fuel economy (rolling resistance index) and abrasion resistance. Furthermore, Table 6 shows that use of hydroxylated epoxidized natural rubber in place of epoxidized natural rubber led to balanced improvement of the fuel economy, abrasion resistance, and grip performance.

## Claims

**1.** A tire produced by using a rubber composition for a tire, comprising
a vulcanizing agent, and
a rubber component containing modified natural rubber that has a hydroxyl group directly bonded to a main chain of natural rubber,

wherein the modified natural rubber has at least one of constitutional units represented by the following formulae (1), (2), (3), and (4) :

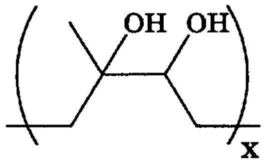

(1)

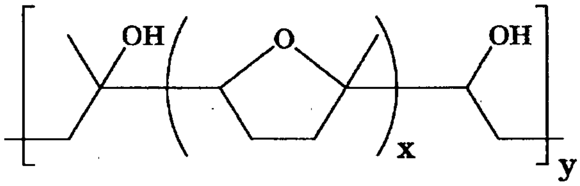

(2)

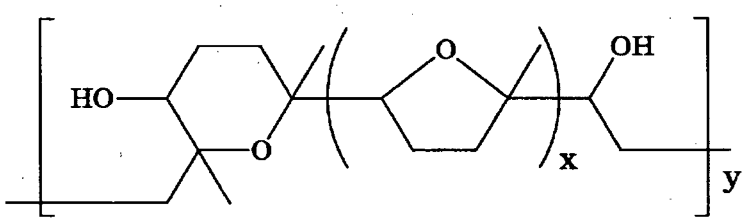

(3)

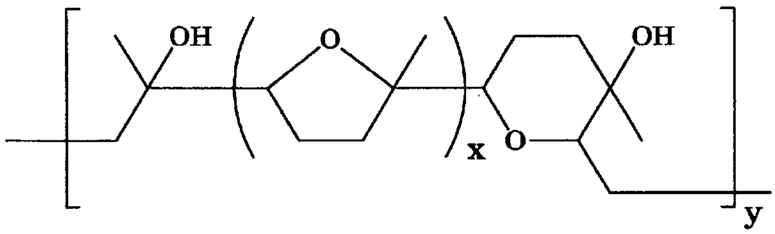

(4)

wherein each of x and y is an integer of 1 or greater, and
wherein the content of hydroxyl groups in the modified natural rubber is 1% to 20% by mole based on isoprene units as determined in the description.

2. The tire according to claim 1,
wherein the modified natural rubber further has an epoxy group.

3. The tire according to claim 2,
wherein the modified natural rubber has a constitutional unit represented by the following formula (5):

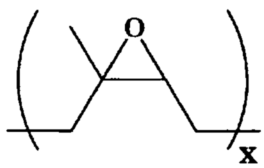

(5)

wherein x is an integer of 1 or greater.

4. The tire according to any one of claims 1 to 3, wherein the rubber composition contains 20% by mass or more of the modified natural rubber per 100% by mass of the rubber component.

5. The tire according to any one of claims 1 to 4, wherein the rubber composition further comprises 10 to 100 parts by mass of silica per 100 parts by mass of the rubber component.

## Patentansprüche

1. Reifen, der unter Verwendung einer Kautschukzusammensetzung für einen Reifen hergestellt ist, umfassend ein Vulkanisationsmittel, und eine Kautschukkomponente, enthaltend modifizierten Naturkautschuk, der eine Hydroxylgruppe aufweist, die direkt mit einer Hauptkette von Naturkautschuk verbunden ist, wobei der modifizierte Naturkautschuk zumindest eine von Struktureinheiten aufweist, die durch die folgenden Formeln (1), (2), (3) und (4) dargestellt sind:

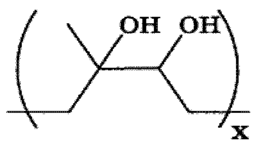
(1)

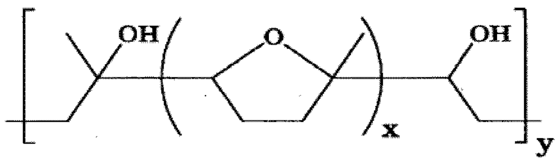
(2)

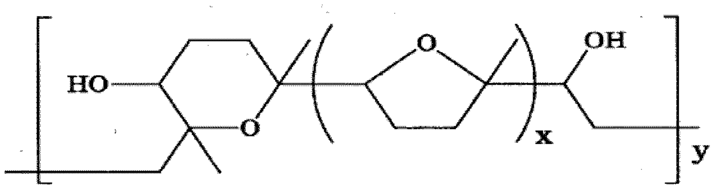
(3)

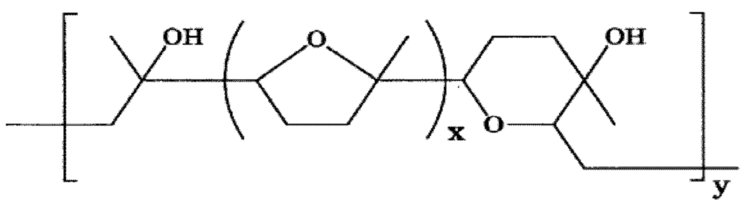
(4)

wobei ein jedes von x und y eine ganze Zahl von 1 oder größer ist, und wobei der Gehalt an Hydroxylgruppen in dem modifizierten Naturkautschuk 1 Mol-% bis 20 Mol-% bezogen auf Isopreneinheiten, wie in der Beschreibung ermittelt, beträgt.

2. Reifen nach Anspruch 1, wobei der modifizierte Naturkautschuk darüber hinaus eine Epoxygruppe aufweist.

3. Reifen nach Anspruch 2, wobei der modifizierte Naturkautschuk eine Struktureinheit aufweist, die durch die folgende Formel (5) dargestellt ist:

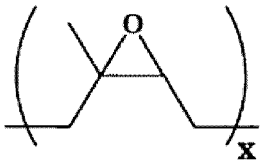

(5)

wobei x eine ganze Zahl von 1 oder größer ist.

4. Reifen nach einem der Ansprüche 1 bis 3, wobei die Kautschukzusammensetzung 20 Masse-% oder mehr des modifizierten Naturkautschuks bezogen auf 100 Masse-% der Kautschukkomponente enthält.

5. Reifen nach einem der Ansprüche 1 bis 4, wobei die Kautschukzusammensetzung darüber hinaus 10 bis 100 Masseteile Siliciumdioxid bezogen auf 100 Masseteile der Kautschukkomponente umfasst.

## Revendications

1. Pneu produit à l'aide d'une composition de caoutchouc pour pneu, comprenant un agent de vulcanisation, et un composant caoutchouc contenant un caoutchouc naturel modifié qui a un groupe hydroxyle directement lié à une chaîne principale du caoutchouc naturel, dans lequel le caoutchouc naturel modifié contient au moins l'un des motifs constitutifs représentés par les formules (1), (2), (3) et (4) suivantes :

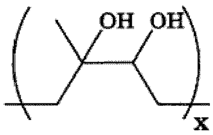

(1)

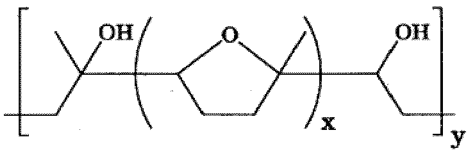

(2)

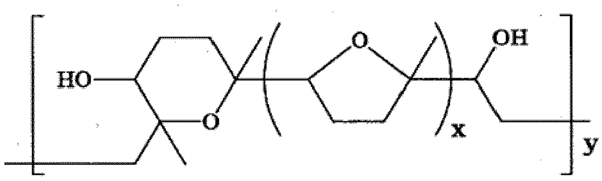

(3)

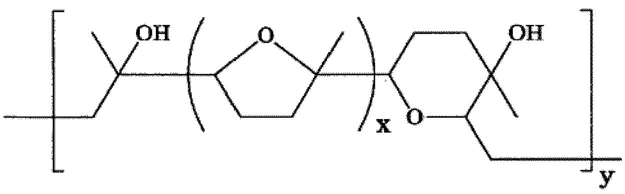

(4)

où chacun des x et y est un nombre entier de 1 ou plus, et

où la teneur en groupes hydroxyle dans le caoutchouc naturel modifié est de 1 à 20 % en moles sur la base des motifs isoprène comme déterminé dans la description.

2. Pneu selon la revendication 1, dans lequel le caoutchouc naturel modifié contient en outre un groupe époxy.

3. Pneu selon la revendication 2, dans lequel le caoutchouc naturel modifié contient un motif constitutif représenté par la formule (5) suivante :

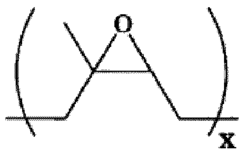

(5)

où x est un entier de 1 ou plus.

4. Pneu selon l'une quelconque des revendications 1 à 3, dans lequel la composition de caoutchouc contient 20 % en poids ou plus de caoutchouc naturel modifié pour 100 % en poids de composant caoutchouc.

5. Pneu selon l'une quelconque des revendications 1 à 4, dans lequel la composition de caoutchouc contient en outre de 10 à 100 parties en poids de silice pour 100 parties en poids de composant caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0588287 A2
- JP 2005041960 A
- JP 2007246712 A
- JP 2004182905 A
- JP 2006199858 A
- JP H0426617 B
- JP H02110182 A
- GB 2113692 A